Europäisches Patentamt

European Patent Office

Office européen des brevets

(11) Publication number: **0 212 864**
A2

# EUROPEAN PATENT APPLICATION

(21) Application number: 86305728.7

(22) Date of filing: 25.07.86

(51) Int. Cl.⁴: **G 02 B 6/18,** G 02 B 6/28, G 02 B 27/14

(30) Priority: 29.07.85 GB 8519086

(43) Date of publication of application: 04.03.87 Bulletin 87/10

(84) Designated Contracting States: DE FR IT NL SE

(71) Applicant: The General Electric Company, p.l.c., 1 Stanhope Gate, London W1A 1EH (GB)

(72) Inventor: Boucouvalas, Anthony Christos, 59 Sherwood Road, South Harrow middlesex HA2 8AW (GB)
Inventor: Georgiou, George Antony, 45 Oakwood Avenue, South Gate London N14 (GB)

(74) Representative: Kirby, Harold Victor Albert, Central Patent Department Wembley Office The General Electric Company, p.l.c. Hirst Research Centre East Lane, Wembley Middlesex HA9 7PP (GB)

(54) Coaxial couplers.

(57) A coaxial phase coupler is produced from an optical fibre by clamping the fibre (10) by means of clamps (16, 18) which can be driven apart in order to taper the intermediate portion of the fibre to a point at which power launched into the core of the fibre is substantially totally coupled or coupled to a desired ratio into the tubular waveguide surrounding the core of the fibre at the required wavelength.

HR/2724 EPC

## Coaxial Couplers

The present invention relates to coaxial waveguide couplers.

In certain applications it is desirable to transfer all or part of the light energy being transmitted along a rod waveguide defined by the core of an optical fibre to a coaxial tubular waveguide surrounding the core. The tubular waveguide is separated form the core by a cladding layer with a refractive index which is depressed relative to the refractive index of both the core and tubular waveguides. The refractive index of the core may be elevated relative to the refractive index of the tubular waveguide or they may be of the same magnitude.

For such a coaxial coupler structure, it is found that the coupler is phase-matched at one wavelength only, due to the different dispersion characteristics of the rod waveguide and the tubular waveguide. Therefore, in order to fabricate a coaxial coupler for a specific wavelength, strict dimensional and refractive index control must be provided to ensure that the two waveguides are precisely phase-matched at the wavelength of interest so that light energy at that frequency is coupled from one waveguide to the other with minimum power loss. The required tolerances are generally better than 1% and this results in high production costs and large failure rates.

It would therefore be desirable to produce a coaxial coupler by means of a method which did not impose such high tolerance requirements.

Accordingly, the present invention provides a method of producing a coaxial coupler which comprises an optical fibre defining a rod waveguide surrounded by a tubular waveguide and which is adapted to couple light energy at a predetermined wavelength from one said waveguide to the other said waveguide, the method comprising the steps of elongating a portion of the optical fibre to reduce the dimensions of the portion while light energy of the predetermined wavelength is being propagated along one waveguide, monitoring the power transmitted at said predetermined wavelength through the reduced portion of the coupler in one of said waveguides, and stopping the elongation when the monitored power indicates that light energy of the predetermined wavelength is being coupled from said one waveguide to the other.

The method of the inventon is advantageous in that it is always possible, starting from an optical fibre of approximately the correct refractive index profile and dimensions, to produce a coupler which is operable at the required wavelength. Since it is possible to produce the initial optical fibre to a relatively low tolerance, the production costs for the coupler can be considerably reduced.

The invention further provides apparatus for producing a coaxial ocupler for coupling light energy of a predetermined wavelength from a rod waveguide to a surrounding tubular waveguide in an optical fibre, comprising a source of radiation at the predtermined wavelength, means for coupling light from the source to the optical fibre so that light of the predetermined wavelength is initially propagated in one waveguide only, means for elongating a portion of the optical fibre, means for monitoring the power propagated at the predetermined wavelength through one of said waveguides, and means for controlling the elongating means in response to the output of the power monitoring means.

Methods and apparatus according to the invention for producing a coaxial coupler will now be described, by way of example only, with reference to the accompanying diagrammatic drawings, in which:

Figure 1 shows various refractive index profiles taken across the diameter of optical fibres suitable for producing coaxial couplers in accordance with the present invention;

Figure 2 shows a diagrammatic representation of the apparatus;

Figure 3 shows a plot of the transmitted power against the extension of the fibre; and

Figure 4 is a diagram representing a section through a tapered portion of the waveguide for explaining the operation of the coupler.

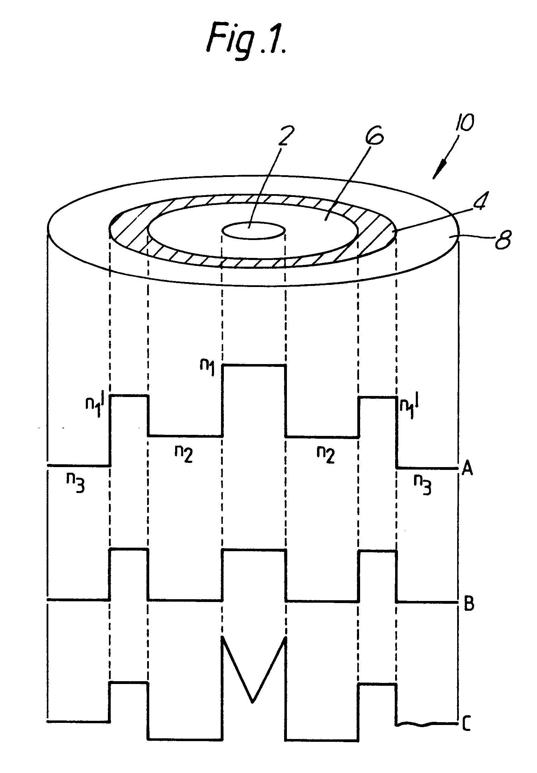

A coaxial coupler is produced from an optical fibre having a refractive index profile as illustrated in Figure 1. The optical fibre defines two waveguides, a central rod waveguide which is defined by the core 2 of the fibre, and a coaxial tubular waveguide 4. As illustrated in plot A of Figure 1, the refractive indices $n_1$, $n_1'$, of the rod and tubular waveguides are elevated relative to the refractive indices $n_2$, $n_3$ of the intermediate cladding layer 6 and the outer coating layer 8. The dimensions and refractive indices $n_1$ of the rod waveguide and the tubular waveguide are selected such that each will support at least one transmission mode at the design wavelength which may be, say, 1.33 or 1.55 micrometres. Plots B and C in Figure 1 show other typical refractive index profiles for optical fibre coaxial couplers.

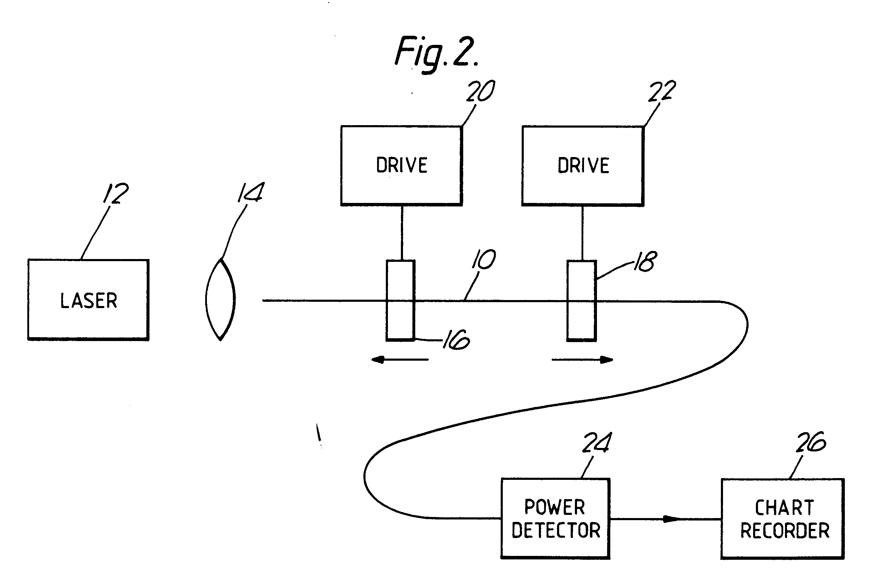

Light energy at the design wavelength will only be coupled from the rod waveguide to the tubular waveguide if there is precise phase-matching at this wavelength between the modes propagated in the two waveguides. Phase-matching depends critically on the refractive indexes and dimensions of the fibre profile. In most cases a fibre produced to have the required profile will not, in fact, be precisely phase-matched at the design wavelength. In order to produce the required phase-matching at the desired wavelength the fibre 10 is placed in the apparatus illustrated in Figure 2 to taper it over a portion of its length to produce three regions of the fibre of opposite phase and mismatch at the design wavelength, is so that light energy launched into one of the waveguides is substantially completely coupled to the other waveguide.

The apparatus of Figure 2 comprises a laser light source producing radiation at the design wavelength. This radiation is passed through a lens 14 to focus it onto the cleaved face of the core 2 of the fibre 10 so that light is propagated along the core of the fibre. Normally the fibre will be surrounded by an acrylate jacket which will strip any modes which start to propagate in the tubular waveguide. If such a jacket is not provided the fibre may pass through a bath of index matching fluid which will prevent light propagation along the tubular waveguide.

The fibre 10 is clamped at two spaced points along its length by clamps 16 and 18. Each clamp is provided with a motorised driver 20, 22 to enable the clamps to be pulled away from each other to taper the portion of the fibre between them. The drives are precisely controlled so that fibre extension of the order of 1cm can be achieved and the extension stopped at a desired point to an accuracy of less than 1mm. The clamps may be positioned vertically one above the other so that gravity can assist the tapering process. An epoxy-butane flame (not shown) is used to heat the fibre while the taper between the clamps is elongated.

Where the fibre is a depressed cladding fibre, that is, where $n_2$ is less than $n_3$ as shown in profile C of Figure 1, the end of the fibre 10 is coupled to a power detector 24 which is connected to a chart recorder. If this is not the case then the power detection is provided by a microscope coupled to a vidicon camera. The power detector or microscope is focused so as to detect the power propagated along the core 2 of the optical fibre 10. If the acrylate jacket does not strip modes propagating in the tubular waveguide, a further bath of index matching fluid is provided after clamp 18 to avoid light propagating in the tubular waveguide affecting the power detector.

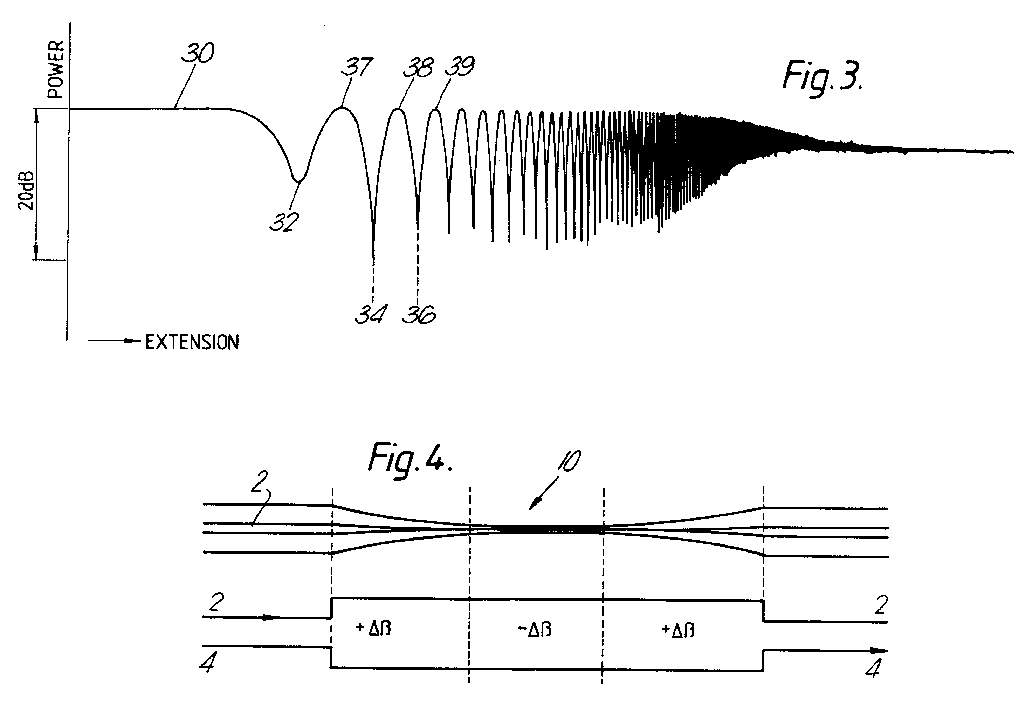

A typical plot produced on the chart recorder 26 is shown in Figure 3. The plot comprises a level section 30 where a constant amount of power is being received. This is indicative of the power launched from the laser into the core being propagated along the core with little or no coupling of power into the tubular waveguide 4. After this level section 30 the received power oscillates increasingly rapidly between a series of minima 32, 34, 36 where little power is being received through the core. These minima correspond to extensions of the fibre at which the tapered portion of the fibre 10 between the clamps 16, 18 is so dimensioned that there is complete energy exchange between the two waveguides. The plot produced in Figure 3 has been shown for a considerable extension of the fibre between the clamps. However, in practice, to produce a coaxial coupler, the drive to the clamps is stopped when the recorder reaches one of the minima 34, 36, or maxima 37, 38, 39 or anywhere in between depending on the application.

If it is desired to produce a coupler which couples a desired proportion of the energy from one waveguide to the other, the taper can be stopped at other than one of the minima in order to produce the required ratio of energy transfer between the waveguides.

The operation of the coaxial coupler produced by this tapered waveguide can be considered as analogous to a three section coupler where the mismatch $(\Delta\beta)$ between the propagation constants in each section alternates in sign. The three sections of the present coupler can be identified as shown in Figure 4. The sign of the difference between the propagation constants of the two waveguides changes between the outer portions of the taper and the central, thinnest, portion of the tapered portion. A description of the mathematics of three section $\Delta\beta$ couplers can be found in an article entitled "Switched Directional Couplers with Alternating $\Delta\beta$ " by Herwig Kogelnik and Ronald V Schmidt in IEEE Journal of Quantum Electronics, Volume QE-12, No. 7, July 1976. This article relates to couplers in which the mismatch is produced by applying electrodes with alternating potential differences across them to the coupled waveguides. However, the dimensional variation of the tapered portion can be considered to produce a similar effect.

## CLAIMS

1. A method of producing a coaxial coupler which comprises an optical fibre defining a rod waveguide surrounded by a tubular waveguide and which is adapted to couple light energy at a predetermined wavelength from one said waveguide to the other said waveguide, the method comprising the steps of elongating a portion of the optical fibre to reduce the dimensions of the portion while light energy of the predetermined wavelength is being propagated along one waveguide, monitoring the power transmitted at said predetermined wavelength through the reduced portion of the coupler in one of said waveguides, and stopping the elongation when the monitored power indicates that light energy of the predetermined wavelength is being coupled from said one waveguide to the other.

2. A method as claimed in Claim 1, wherein the light energy is focussed on a cleaved face of the fibre and any modes propagated in the tubular waveguide are stripped both before and after the elongated portion of the fibre, the power transmitted through the rod waveguide being monitored.

3. A method as claimed in Claim 1 or 2, wherein the portion of the fibre to be elongated is heated.

4. A method as claimed in any one of the preceding Claims, wherein the elongating step is carried out by clamping the fibre at spaced intervals and driving the clamps relatively apart.

5. A method according to any one of the preceding Claims wherein the fibre is a depressed cladding fibre, and a power detector is used to detect power propagated along the rod waveguide.

6. A method according to any one of Claims 1 to 4 wherein a microscope coupled to a Vidicon camera is used to detect power propagated along the rod waveguide.

7. Apparatus for producing a coaxial coupler for coupling light energy of a predetermined wavelength from a rod waveguide to a surrounding tubular waveguide in an optical fibre, comprising a source of radiation at the predetermined wavelength, means for coupling light from the source to an optical fibre so that light of the predetermined wavelength is initially propagated in one waveguide only, means for elongating a portion of the fibre, means for monitoring the power propagated at the predetermined wavelength through one of said waveguides, and means for controlling the elongating means in response to the output of the power monitoring means.

8.  Apparatus as claimed in Claim 7, wherein the elongating means comprises holding means for holding the fibre at either end of said portion, and means for driving the holding means relatively apart.

# Fig.1.

Fig.2.

Fig.3.

Fig.4.

0212864